# EUROPÄISCHE PATENTSCHRIFT

(11) **EP 4 169 745 B1**
(45) Veröffentlichungstag und Bekanntmachung des Hinweises auf die Patenterteilung: **15.01.2025**
(21) Anmeldenummer: 22200540.7
(22) Anmeldetag: 10.10.2022
(51) Int. Cl.: B60C 29/06, F16K 15/20, B60S 5/04, B29C 73/16

(54) **REIFENANSCHLUSSVENTILEINRICHTUNG ZUM VERBINDEN EINES PANNENHILFESETS MIT EINEM REIFENVENTIL UND PANNENHILFESET MIT EINER SOLCHEN REIFENANSCHLUSSVENTILEINRICHTUNG**
TYRE CONNECTION VALVE DEVICE FOR CONNECTING A PUNCTURE AID SET TO A TYRE VALVE AND PUNCTURE AID SET WITH SUCH A DEVICE
DISPOSITIF DE VALVE DE RACCORDEMENT DE PNEU POUR RACCORDER UN ENSEMBLE D'AIDE A LA CREVAISON A UNE VALVE DE PNEU ET ENSEMBLE D'AIDE A LA CREVAISON AVEC UN TEL DISPOSITIF

(30) Priorität: 19.10.2021 DE 102021211788
(43) Veröffentlichungstag der Anmeldung: 26.04.2023
(73) Patentinhaber: Continental Reifen Deutschland GmbH, 30175 Hannover (DE)
(72) Erfinder: Schlosser, Florian, 30165 Hannover (DE); Detering, Rainer, 30165 Hannover (DE)
(74) Vertreter: Continental Corporation

(56) Entgegenhaltungen:
- EP-A1- 2 186 628
- WO-A1-2015/145443
- DE-A1- 102015 220 060
- JP-A- 2007 182 036
- JP-A- 2008 002 513
- US-A- 5 070 917

## Beschreibung

Die Erfindung betrifft eine Reifenanschlussventileinrichtung als Verbindungselement zwischen einem Füllschlauch eines Pannenhilfesets und einem Reifenventil eines Fahrzeugreifens gemäß dem Patentanspruch 1 sowie ein Pannenhilfeset zum Abdichten und Aufpumpen von Fahrzeugreifen gemäß dem Patentanspruch 9.

Reifenanschlussventile für Pannenhilfesets sowie Pannenhilfesets mit Reifenanschlussventilen sind im Stand der Technik bekannt und werden üblicherweise eingesetzt, um das Pannenhilfeset über einen Schlauch mit dem Fahrzeugreifen beziehungsweise dem Ventil des Reifens zu verbinden. Ein Pannenhilfeset umfasst üblicherweise einen Kompressor zur Erzeugung von Druckluft, durch die ein Dichtmittel zum Abdichten eines Fahrzeugreifens im Falle einer Panne in den Fahrzeugreifen gepumpt wird und/oder den Fahrzeugreifen nach dem Abdichten mit Luft zu befüllen.

Die DE102015220060 offenbart beispielsweise ein Reifenanschlussventil beziehungsweise einen Adapter als Verbindungselement zwischen einem Füllschlauch eines Pannensets und einem Reifenventil eines Reifens, wobei das Reifenanschlussventil durch einen federbelasteten Ventilkörper selbstschließend ausgebildet ist und der Ventilkörper durch das Aufbringen des Reifenanschlussventils auf das Reifenventil geöffnet wird, wobei das Reifenanschlussventil eine Einrichtung zur lösbaren Verbindung mit dem Reifenventil aufweist.

Die JP2007182036A offenbart einen Verbinder und einen Verbindersatz, der die erforderlichen Funktionen besitzt und kostengünstig hergestellt werden kann. Dieses Dokument bildet die Basis für den Oberbegriff von Patentanspruch 1.

Die US5070917A beschreibt eine kompakte Vorrichtung zum abgedichteten Speichern und anschließenden Abgeben einer vorgegebenen Lademenge einer Reifendichtflüssigkeit in das Innere eines Reifens umfassend ein hohles Flüssigkeitsspeicher- und -übertragungselement mit einem Einlassanschluss und einem Auslassanschluss, in dem die Dichtflüssigkeit angeordnet ist.

Ferner offenbart die WO2015145443A1 eine Vorrichtung zum Aufblasen und Abdichten eines aufblasbaren Objekts, die einen luftdichten Schlauch, mindestens einen hermetischen Verbinder, der reversibel mit einem oder beiden Enden des luftdichten Schlauchs verbunden ist, und eine Druckquelle umfasst, die entweder mit einem Ende, dem zweiten Ende oder dem mindestens einen hermetischen Verbinder verbunden ist.

Die DE102015220060A1 offenbart ein Reifenanschlussventil als Verbindungselement zwischen einem Füllschlauch eines Pannensets und einem Reifenventil eines Reifens, wobei das Reifenanschlussventil durch einen federbelasteten Ventilkörper selbstschließend ausgebildet ist und der Ventilkörper durch das Aufbringen des Reifenanschlussventils auf das Reifenventil geöffnet wird und eine in seinem inneren und für Luft und/oder Dichtmittel vorgesehenen Durchtrittsquerschnitt angeordnete Ringdichtung enthält, die a) in Strömungsrichtung ausgangsseitig eine Dichtfläche zur stirnseitigen Abdichtung des eingeschraubten Reifenventils aufweist, b) auf ihrem Außenumfang und in Strömungsrichtung eingangsseitig Dichtflächen aufweist zur Abdichtung der Rändelmutter gegenüber dem Endstück des Füllschlauches, und c) auf ihrem Innenumfang und in Strömungsrichtung eingangsseitig Dicht- und Anlageflächen zur Anlage des federbelasten Ventilkörpers aufweist.

Die JP2008002513A offenbart einen Ventilverbinder, der die Neigung eines Ventilelements stärker unterdrückt als bei einem herkömmlichen Verbinder, um den Widerstand in einem Durchflusskanal zu verringern und eine stabile Durchflussrate sicherzustellen.

Ferner beschreibt die EP2186628A1 einen Ventiladapter für ein Abdicht-/Aufpumpgerät, der Luft aus einem Reifen ablassen kann, ohne das im Gerät verbleibende Abdichtmittel freizugeben.

Derzeitige Entwicklungen von Pannenhilfesets führen zu immer kleineren Bauteilen, weshalb funktionelle Elemente, wie beispielsweise ein Ablassventil, am Pannenhilfeset anders als üblich angeordnet werden müssen, damit die Funktionsfähigkeit des Pannenhilfesets für den Verbraucher weiterhin gegeben ist. Problematisch ist, dass diese Bauteile formstabil und kostengünstig herstellbar sein müssen, um den heutigen Anforderungen nachzukommen. Eine entsprechende Problematik gilt für Reifenanschlussventile.

Hier setzt die vorliegende Erfindung an. Es ist die Aufgabe der Erfindung eine verbesserte Reifenanschlussventileinrichtung bereitzustellen, die einerseits kostengünstig und einfach herstellbar ist und andererseits den Luftdruck regulieren kann. Ferner ist es die Aufgabe der Erfindung ein verbessertes Pannenhilfeset bereitzustellen, welches einerseits kostengünstig herstellbar ist und andererseits eine einfache Möglichkeit der Luftregulierung im Fahrzeugreifen bietet.

Gelöst wird die Aufgabe durch eine Reifenanschlussventileinrichtung mit den Merkmalen des Patentanspruchs 1. Ferner wird die Aufgabe durch ein Pannenhilfeset mit den Merkmalen des Patentanspruchs 10 gelöst.

Die Aufgabe wird durch eine Reifenanschlussventileinrichtung als Verbindungselement zwischen einem Füllschlauch eines Pannenhilfesets und einem Reifenventil eines Fahrzeugreifens gelöst, wobei die Reifenanschlussventileinrichtung einen Grundkörper mit einer Einlassöffnung und einer Auslassöffnung aufweist, wobei eine Öffnung zumindest ein Gewinde umfasst, über das die Reifenanschlussventileinrichtung mit dem Reifenventil verbindbar ist, und die Reifenanschlussventileinrichtung ein Ablassventil zur Regulierung der Luft aufweist, wobei das Gewinde Kunststoff umfasst.

Vorteilhafterweise ist die erfindungsgemäße Reifenanschlussventileinrichtung mit einem Gewinde umfassend Kunststoff formstabil und sowohl einfach als auch kostengünstig herstellbar. Durch die erfindungsgemäße Reifenanschlussventileinrichtung kann die Luftführung im Kompressor erhalten bleiben. Außerdem kann das Gehäuse des Kompressors komprimiert werden, da das Ablassventil in der Reifenanschlussventileinrichtung integriert ist.

Im Sinne der Erfindung umfasst das Gewinde Kunststoff. Dazu ist der Abschnitt, der das Gewinde aufweist, zumindest teilweise aus Kunststoff. Ein wesentlicher Vorteil von Kunststoff ist die einfache Handhabung im Herstellungsprozess, da die Abschnitte oder Bauteile des Grundkörpers in einem Verfahrensschritt hergestellt werden können. Bevorzugt werden die Abschnitte oder der gesamte Grundkörper im Spritzgussverfahren hergestellt. Andere Verfahren sind ebenfalls denkbar.

Der Grundkörper ist im Sinne der Erfindung so ausgebildet, dass durch diesen Luft und/oder Dichtmittel strömen kann. Dazu weist dieser mindestens zwei Öffnungen auf, wobei die Luft und/oder das Dichtmittel in die erste Öffnung einströmen und aus der zweiten Öffnung herausströmen kann. Denkbar ist, dass der Grundkörper eine zylindrische Form aufweist.

In einer bevorzugten Ausführungsform der Erfindung umfasst das Gewinde ein Polyamid, besonders bevorzugt ein Polyamid mit Glasfaserverstärkung. Der Einsatz von Polyamiden ist vorteilhaft, da Polyamide wegen ihrer hervorragenden Festigkeit und Zähigkeit besonders geeignet sind. Bevorzugt weist zumindest der Abschnitt des Gewindes eine Härte nach Shore (A/D) von mindestens D84 auf und/oder eine Zug-Biegemodul im Bereich von 500 bis 16000 MPa, insbesondere nach ISO 527.Ein weiterer Vorteil ist die Wärmeformbeständigkeit B von mindestens 160°C nach ISO 75 HDT/B. Vorteilhafterweise eignen sich Polyamide mit solchen Eigenschaften besonders gut, da diese somit länger haltbar sind und deutlich einfacher produziert werden können. Hinzufügend reduzieren sich die Herstellungskosten. Besonders bevorzugt ist das Polyamid ein Polyamid 66 und/oder ein Polyamid 6, auch PA 66 beziehungsweise PA 6. PA 66 und/oder PA 6 sind vorteilhafterweise besonders formstabil.

In einer weiteren erfindungsgemäßen Ausführungsform der Erfindung weist die Reifenanschlussventileinrichtung zumindest ein Schließelement auf, welches im Gehäuse angeordnet ist. Das Schließelement ist so ausgebildet, dass es öffnet, wenn das Autoventil mit der Reifenanschlussventileinrichtung verbunden ist. Besonders bevorzugt öffnet sich das Schließelement druckabhängig, nämlich wenn das Fahrzeugreifenventil gegen das Schließelement drückt. Vorteilhafterweise ist die Reifenanschlussventileinrichtung geschlossen, wenn diese nicht mit einem Fahrzeugreifenventil verbunden ist, sodass kein Medium austreten kann. Erst nach Anschluss an das Fahrzeugreifenventil öffnet sich dieses, sodass der Benutzer eine solche Reifenanschlussventileinrichtung sicher einsetzen kann.

Besonders bevorzugt ist das Gewinde und das Schließelement in den Grundkörper integriert. Vorteilhaft ist sowohl der Grundkörper, das Gewinde und das Schließelement als ein Bauteil ausgebildet, sodass die Herstellung eines solchen Bauteils deutlich einfacher und kostengünstiger ist.

In einer weiteren bevorzugten Ausführungsform ist die Reifenanschlussventileinrichtung über das Gewinde formschlüssig mit dem Reifenventil verbindbar, sodass Luft und/oder Dichtmittel in den Fahrzeugreifen und/oder Luft über das Ablassventil aus dem Fahrzeugreifen strömbar ist. Vorteilhafterweise ist das Gewinde so ausgebildet, dass es mit dem Reifenventil so verbindbar ist, dass der Reifen im Falle einer Panne mit Luft und/oder Dichtmittel befüllbar ist. Der Luftdruck kann über das Ablassventil zusätzlich reguliert werden.

Weiter bevorzugt ist das Ablassventil im Wesentlichen mittig in Längserstreckung der Ventileinrichtung angeordnet. Vorteilhafterweise ist das Ablassventil mittig angeordnet, damit die Ventileinrichtung auf der einen Seite mit dem Füllschlauch und auf der anderen Seite über das Gewinde mit dem Reifenventil verbindbar ist. Besonders bevorzugt ist das Ablassventil am Grundkörper angeordnet.

Ferner bevorzugt ist die Reifenanschlussventileinrichtung, insbesondere der Grundkörper, als ein Bauteil ausgebildet. Besonders bevorzugt umfasst dieser Kunststoff oder besteht aus Kunststoff. Ganz besonders bevorzugt ist der Kunststoff aus einem Polyamid, beispielsweise Polyamid 66 und/oder Polyamid 6. Vorteilhafterweise kann der Grundkörper umfassend das Gewinde in einem Verfahrensschritt hergestellt werden. Ein Grundkörper aus Kunststoff, insbesondere Polyamid, ist besonders formstabil.

In einer weiteren bevorzugten Ausführungsform der Erfindung ist das Ablassventil als ein Druckschalter ausgebildet, durch den Luft aus dem Fahrzeugreifen beförderbar ist, sobald der Druckschalter betätigt wird. Der Druckschalter kann beispielsweise aus Kunststoff bestehen. Vorteilhafterweise ist der Druckschalter einteilig ausgebildet. Denkbar ist allerdings auch, dass dieser mehrteilig ausgebildet ist.

Weiterhin bevorzugt ist das Ablassventil eine Öffnung, die ein abschraubbares Verschließelement aufweist. Das Verschließelement könnte beispielsweise Kunststoff, insbesondere Polyamid, Polyamid 66 und/oder Polyamid 6, umfassen. Vorteilhafterweise kann ein solches Verschließelement das Ablassventil wieder dann verschließen, wenn der gewünschte Luftdruck im Reifen erreicht ist. Außerdem ist es möglich, dass der Benutzer die Luftzufuhr insgesamt regulieren kann.

In einer weiteren bevorzugten Ausführungsform der Erfindung weist der Grundkörper ein Anschlusselement auf, durch das dieser mit einem Füllschlauch oder mit einer Dichtmittelflasche verbindbar ist. Das Anschlusselement kann beispielsweise verjüngt sein, damit der Füllschlauch auf den Anschluss gesteckt werden kann.

Weiterhin wird die Aufgabe der Erfindung durch ein Pannenhilfeset zum Abdichten und Aufpumpen von Fahrzeugreifen gelöst, umfassend einen Kompressor mit einem Elektromotor zur Erzeugung des Abdicht- und/oder Pumpdrucks, einen Anschluss für einen Behälter mit Dichtmittel sowie einen Füllschlauch, durch welchen Luft und/oder Dichtmittel über den Kompressor strömbar ist, dadurch gekennzeichnet, dass das Pannenhilfeset eine beschriebene Reifenanschlussventileinrichtung umfasst.

Vorteilhafterweise ist der Einsatz eines solchen erfindungsgemäßen Pannenhilfesets für den Benutzer einfach und sicher zu bedienen, da dieses ein Ablassventil an der Reifenanschlussventileinrichtung aufweist. Das Pannenhilfeset mit einem solchen Reifenanschlussventileinrichtung, wobei dieses zumindest ein Gewinde umfassend Kunststoff, aufweist, ist deutlich einfacher herzustellen und zeigt verbesserte Stabilitäten hinsichtlich der Verwendungsdauer.

Weitere Vorteile und Merkmale der erfindungsgemäßen Reifenanschlussventileinrichtung und des Pannenhilfesets ergeben sich nebst der Beschreibung zusätzlich aus den Unteransprüchen, die sich auf vorteilhafte Ausgestaltungen der vorliegenden Erfindung beziehen und als solche nicht einschränkend zu verstehen sind. Von der Erfindung mit umfasst sind auch Kombinationen der Merkmale verschiedener Unteransprüche, auch wenn sich die Unteransprüche nicht aufeinander beziehen oder wenn diese verschiedenen Anspruchskategorien zugehören. Ferner sind auch Kombinationen von bevorzugten und besonders bevorzugten Ausführungsformen untereinander miteinander kombinierbar. Dies gilt auch für die einzelnen Merkmale des nachfolgenden diskutierten Ausführungsbeispiels, soweit diese nicht für den Fachmann als zwingend zueinander gehörig erkennbar sind.

### Figurenbeschreibung

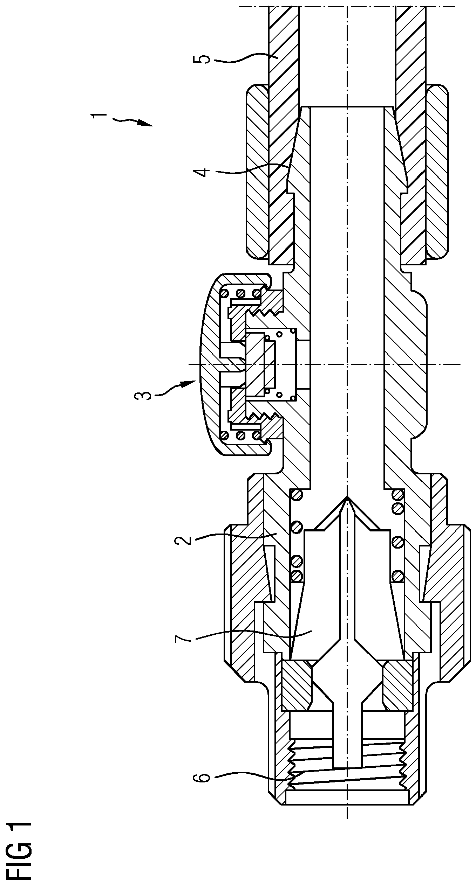

Weitere Einzelheiten und Vorteile der vorliegenden Erfindung ergeben sich aus der nachfolgenden Beschreibung des Ausführungsführungsbeispiels in Verbindung mit der Zeichnung. In dieser zeigt
- Figur 1: eine Ausführungsform der erfindungsgemäßen Reifenanschlussventileinrichtung.

Figur 1 zeigt eine Ausführungsform der erfindungsgemäßen Reifenanschlussventileinrichtung 1, welche einen Grundkörper 2 umfasst. Am Grundkörper 2 ist ein Ablassventil 3 als Druckknopf angeordnet. Ferner weist der Grundkörper 2 an einem Ende eine Verjüngung 4 auf, an der ein Füllschlauch 5 angeschlossen ist. Über den Füllschlauch 5 wird Luft und/oder Dichtmittel über die Reifenanschlussventileinrichtung 1 in den Reifen gefördert. Das andere Ende des Grundkörpers 2 weist ein Gewinde 6 auf. Über das Gewinde 6 wird das Autoventil mit der Ventileinrichtung 1 verbunden. Ferner weist die Ventileinrichtung 1 ein Schließelement 7 auf, welches die Ventileinrichtung 1 erst öffnet, wenn diese mit dem Autoventil verbunden wird. Dazu weist das Schließelement 7 einen Vorsprung auf, der in den Bereich des Gewindes 6 hineinragt und welches das Autoventil drückt und öffnet, wenn dieses mit der Reifenanschlussventileinrichtung 1 verbunden wird.

### Bezugszeichenliste:

- 1: Reifenanschlussventileinrichtung
- 2: Grundkörper
- 3: Ablassventil
- 4: Verjüngung
- 5: Füllschlauch
- 6: Gewinde
- 7: Schließelement

## Patentansprüche

1. Reifenanschlussventileinrichtung (1) als Verbindungselement zwischen einem Füllschlauch eines Pannenhilfesets und einem Reifenventil eines Fahrzeugreifens, wobei die Reifenanschlussventileinrichtung (1) einen Grundkörper (2) mit einer Einlassöffnung und einer Auslassöffnung aufweist, wobei eine Öffnung zumindest ein Gewinde (6) umfasst, über das die Reifenanschlussventileinrichtung (1) mit dem Reifenventil verbindbar ist, und die Reifenanschlussventileinrichtung (1) ein Ablassventil (3) zur Regulierung der Luft aufweist, wobei die Reifenanschlussventileinrichtung (1) zumindest ein Schließelement (7) aufweist, welches im Gehäuse angeordnet ist, wobei die Reifenanschlussventileinrichtung (1) erst öffnet, wenn diese mit einem Autoventil verbunden wird,
**dadurch gekennzeichnet, dass** der Grundkörper (2), das Gewinde (6) und das Schließelement (7) als ein Bauteil ausgebildet ist, wobei
das Gewinde (6) Kunststoff umfasst.

2. Reifenanschlussventileinrichtung (1) nach Anspruch 1, **dadurch gekennzeichnet, dass** das Gewinde (6) ein Polyamid, bevorzugt ein Polyamid mit Glasfaserverstärkung umfasst, wobei das Polyamid ganz bevorzugt ein Polyamid 66 und/oder Polyamid 6 umfasst.

3. Reifenanschlussventileinrichtung (1) nach Anspruch 1 oder 2, **dadurch gekennzeichnet, dass** die Reifenanschlussventileinrichtung (1) über das Gewinde (6) formschlüssig mit dem Reifenventil verbindbar ist, sodass Luft und/oder Dichtmittel in den Fahrzeugreifen und/oder Luft über das Ablassventil (3) aus dem Fahrzeugreifen strömbar ist.

4. Reifenanschlussventileinrichtung (1) nach einem der vorherigen Ansprüche, **dadurch gekennzeichnet, dass** das Ablassventil (3) im Wesentlichen mittig in Längserstreckung der Reifenanschlussventileinrichtung (1), insbesondere am Grundkörper (2), angeordnet ist.

5. Reifenanschlussventileinrichtung (1) nach einem der vorherigen Ansprüche, **dadurch gekennzeichnet, dass** die Reifenanschlussventileinrichtung (1), insbesondere der Grundkörper (2), als ein Bauteil ausgebildet ist und bevorzugt Kunststoff umfasst oder aus Kunststoff besteht, besonders bevorzugt aus Polyamid 66 und/oder Polyamid 6.

6. Reifenanschlussventileinrichtung (1) nach einem der vorherigen Ansprüche, **dadurch gekennzeichnet, dass** das Ablassventil (3) als ein Druckschalter ausgebildet ist, durch den Luft aus dem Fahrzeugreifen beförderbar ist, sobald der Druckschalter betätigt wird.

7. Reifenanschlussventileinrichtung (1) nach einem der vorherigen Ansprüche, **dadurch gekennzeichnet, dass** das Ablassventil (3) eine Öffnung ist, die ein abschraubbares Verschließelement aufweist.

8. Reifenanschlussventileinrichtung (1) nach einem der vorherigen Ansprüche, **dadurch gekennzeichnet, dass** der Grundkörper (2) ein Anschlusselement aufweist, durch das dieser mit einem Schlauch (5) oder mit einer Dichtmittelflasche verbindbar ist.

9. Pannenhilfeset zum Abdichten und Aufpumpen von Fahrzeugreifen, umfassend einen Kompressor mit einem Elektromotor zur Erzeugung des Abdicht- und/oder Pumpdrucks, einen Anschluss für einen Behälter mit Dichtmittel sowie einen Füllschlauch, durch welchen Luft und/oder Dichtmittel über den Kompressor strömbar ist, **dadurch gekennzeichnet, dass** das Pannenhilfeset eine Reifenanschlussventileinrichtung (1) nach einem der vorherigen Ansprüche umfasst.

## Claims

1. Tyre attachment valve device (1) as a connecting element between a filling tube of a puncture repair kit and a tyre valve of a vehicle tyre, wherein the tyre attachment valve device (1) has a main body (2) with an inlet opening and an outlet opening, wherein an opening comprises at least one thread (6) via which the tyre attachment valve device (1) can be connected to the tyre valve, and the tyre attachment valve device (1) has a discharge valve (3) for regulating the air, wherein the tyre attachment valve device (1) has at least one closing element (7) which is arranged in the housing, wherein the tyre attachment valve device (1) only opens when it is connected to a car tyre valve,
**characterized in that** the main body (2), the thread (6) and the closing element (7) are formed as one component, wherein the thread (6) comprises plastic.

2. Tyre attachment valve device (1) according to Claim 1, **characterized in that** the thread (6) comprises a polyamide, preferably a polyamide with glass fibre reinforcement, wherein the polyamide very preferably comprises a polyamide 66 and/or polyamide 6.

3. Tyre attachment valve device (1) according to Claim 1 or 2, **characterized in that** the tyre attachment valve device (1) can be positively connected to the tyre valve via the thread (6), so that air and/or sealant can flow into the vehicle tyre and/or air can flow out of the vehicle tyre via the discharge valve (3).

4. Tyre attachment valve device (1) according to any of the preceding claims, **characterized in that** the discharge valve (3) is arranged substantially centrally in the longitudinal extent of the tyre attachment valve device (1), in particular on the main body (2).

5. Tyre attachment valve device (1) according to any of the preceding claims, **characterized in that** the tyre attachment valve device (1), in particular the main body (2), is designed as a component and preferably comprises plastic or consists of plastic, particularly preferably of polyamide 66 and/or polyamide 6.

6. Tyre attachment valve device (1) according to any of the preceding claims, **characterized in that** the discharge valve (3) is designed as a pressure switch, by way of which air can be conveyed out of the vehicle tyre as soon as the pressure switch is actuated.

7. Tyre attachment valve device (1) according to any of the preceding claims, **characterized in that** the discharge valve (3) is an opening which has a screw-off closure element.

8. Tyre attachment valve device (1) according to any of the preceding claims, **characterized in that** the main body (2) has an attachment element, by way of which it can be connected to a hose (5) or to a sealant bottle.

9. Puncture repair kit for sealing and pumping up vehicle tyres, comprising a compressor with an electric motor for generating the sealing and/or pumping pressure, an attachment for a container containing sealant, and a filling tube through which air and/or sealant can flow via the compressor, **characterized in that** the puncture repair kit comprises a tyre attachment valve device (1) according to any of the preceding claims.

## Revendications

1. Dispositif de valve de raccordement de pneu (1) en tant qu'élément de liaison entre un tube de remplissage d'un kit anti-crevaison et une valve de pneu d'un pneu de véhicule, dans lequel le dispositif de valve de raccordement de pneu (1) présente un corps de base (2) pourvu d'une ouverture d'entrée et d'une ouverture de sortie, dans lequel une ouverture comprend au moins un filetage (6) par lequel le dispositif de valve de raccordement de pneu (1) peut être relié à la valve de pneu, et le dispositif de valve de raccordement de pneu (1) présente une valve de décharge (3) pour réguler l'air, dans lequel le dispositif de valve de raccordement de pneu (1) présente au moins un élément de fermeture (7) qui est disposé dans le boîtier, dans lequel le dispositif de valve de raccordement de pneu (1) ne s'ouvre que lorsqu'il est relié à une valve de voiture,
**caractérisé en ce que** le corps de base (2), le filetage (6) et l'élément de fermeture (7) sont réalisés comme un seul composant, le filetage (6) comprenant de la matière plastique.

2. Dispositif de valve de raccordement de pneu (1) selon la revendication 1, **caractérisé en ce que** le filetage (6) comprend du polyamide, de préférence du polyamide renforcé par des fibres de verre, le polyamide comprenant de manière particulièrement préférée du polyamide 66 et/ou du polyamide 6.

3. Dispositif de valve de raccordement de pneu (1) selon la revendication 1 ou 2, **caractérisé en ce que** le dispositif de valve de raccordement de pneu (1) peut être relié à la valve de pneu par complémentarité de forme par l'intermédiaire du filetage (6) de sorte que l'air et/ou un produit d'étanchéité peuvent être amenés à s'écouler dans le pneu de véhicule et/ou l'air peut être amené par l'intermédiaire de la valve de décharge (3) à s'écouler hors du pneu de véhicule.

4. Dispositif de valve de raccordement de pneu (1) selon l'une quelconque des revendications précédentes, **caractérisé en ce que** la valve de décharge (3) est disposée de manière substantiellement centrée dans l'étendue longitudinale du dispositif de valve de raccordement de pneu (1), en particulier sur le corps de base (2).

5. Dispositif de valve de raccordement de pneu (1) selon l'une quelconque des revendications précédentes, **caractérisé en ce que** le dispositif de valve de raccordement de pneu (1), en particulier le corps de base (2), est réalisé comme un seul composant et comprend de préférence de la matière plastique ou est composé de matière plastique, de manière particulièrement préférée de polyamide 66 et/ou de polyamide 6.

6. Dispositif de valve de raccordement de pneu (1) selon l'une quelconque des revendications précédentes, **caractérisé en ce que** la valve de décharge (3) est réalisée sous forme d'interrupteur à pression à travers lequel l'air peut être évacué du pneu de véhicule dès que l'interrupteur à pression est actionné.

7. Dispositif de valve de raccordement de pneu (1) selon l'une quelconque des revendications précédentes, **caractérisé en ce que** la valve de décharge (3) est un orifice qui présente un élément de fermeture pouvant être dévissé.

8. Dispositif de valve de raccordement de pneu (1) selon l'une quelconque des revendications précédentes, **caractérisé en ce que** le corps de base (2) présente un élément de raccordement par lequel celui-ci peut être relié à un tuyau (5) ou à un flacon de produit d'étanchéité.

9. Kit anti-crevaison permettant de colmater et de gonfler des pneus de véhicule, comprenant un compresseur pourvu d'un moteur électrique pour générer la pression de colmatage et/ou de gonflage, un raccord pour un récipient de produit d'étanchéité, ainsi qu'un tube de remplissage par lequel l'air et/ou le produit d'étanchéité peuvent être amenés à s'écouler par l'intermédiaire du compresseur, **caractérisé en ce que** le kit anti-crevaison comprend un dispositif de valve de raccordement de pneu (1) selon l'une quelconque des revendications précédentes.
